# EUROPEAN PATENT APPLICATION

(11) **EP 4 803 874 A1**
(43) Date of publication of application: **09.09.2026**
(21) Application number: 24885975.3
(22) Date of filing: 08.08.2024
(51) Int. Cl.: G01M 3/32

(54) **WATERPROOF INSPECTION APPARATUS HAVING SEALING MEANS CAPABLE OF COPING WITH POSITIONAL TOLERANCE**

(30) Priority: 31.10.2023 KR 20230148182
(71) Applicant: DMC Co., Ltd., Suwon-si Gyeonggi-do 16648 (KR)
(72) Inventor: KIM, Dong Un, Incheon 21661 (KR); LEE, Ju Hee, Gumi-si Gyeongsangbuk-do 39181 (KR)
(74) Representative: Noréns Patentbyrå AB
(86) International application number: PCT/KR2024/011828
(87) International publication number: WO 2025/095295

(57) **Abstract**

Proposed in a waterproof inspection apparatus, according to the present invention, is a sealing means which inserts and seals an insertion body into a hole to be sealed, rather than a manner of covering and sealing the outer circumferential surface of the hole to be sealed. The present invention relates to a waterproof inspection apparatus for testing waterproof performance of an inspection object by placing the inspection object in a sealed chamber formed between a lower jig (1) and an upper jig (2), sealing a hole formed on a border edge surface of the inspection object by means of a sealing means (100), and measuring a pressure change inside the chamber. Rather than a conventional covering seal block which covers (includes) a hole formed on a border (edge) side surface of an inspection object so as to cover a predetermined area of the edge side surface, the waterproof inspection apparatus is characterized by comprising: a sealing member (120) comprising a moving body (121) which has an insertion body (123) inserted into or removed from the hole, is guided by the lower jig (1), and is moved toward the chamber or in the opposite direction thereof; and a driving member (150) which moves the moving body (121) toward the chamber or in the opposite direction thereof.

## Description

### Technical Field

The present disclosure relates to a waterproofness inspection apparatus and, more particularly, to a waterproofness inspection apparatus having a sealing means inserted internally to seal a side slot of an object to be inspected.

### Background Art

Portable devices like smartphones are prone to water damage because they are often used while being carried around, and because they contain electronic components that are vulnerable to water, waterproofness is a key factor in determining the quality of portable devices, which are becoming increasingly expensive.

In this context, the inventors of the present disclosure have developed various techniques for testing the waterproof performance of portable terminals (e.g., Korean Patent Nos. 10-1598849, 10-1889353, and 10-2022328).

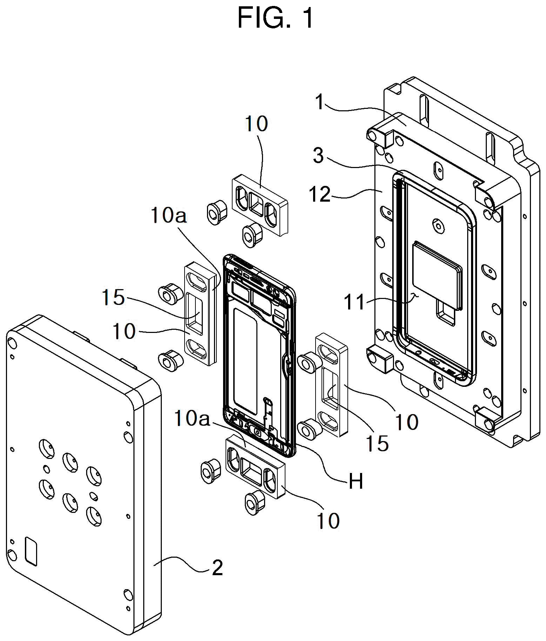

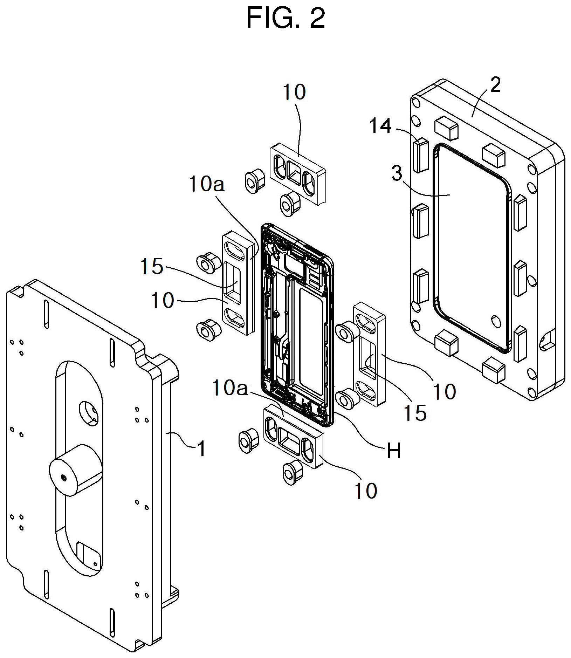

As shown in FIGS. 1 and 2, the waterproof inspection devices disclosed in Korean Patent Nos. 10-1598849 and 10-1889353 comprise a lower jig 1, an upper jig 2, and a sealed chamber formed between the lower jig 1 and the upper jig 2. After placing an object to be inspected (i.e., a portable terminal) H in the correct position within the sealed chamber, and closing the lower jig 1 and the upper jig 2, waterproof testing may be performed by measuring the pressure change in the chamber.

At this time, to seal holes formed on the edge sides of the portable terminal (object to be inspected), such as a charging socket or a microphone hole, the waterproof inspection device is provided with a seal block 10. The waterproof inspection device further includes a pushing member 14 configured to press the seal block 10 against the edge sides of the portable terminal or retract the seal block 10 from the edge sides, in accordance with a start or end signal of the waterproof test.

The seal block 10 shown in FIGS. 1 and 2 is composed of a covering seal block 10 configured to cover the edge sides of the portable terminal (object to be inspected), including holes formed thereon, such as a charging socket, a microphone hole, and a speaker hole. A side pad 10a made of a material having excellent sealing properties, such as rubber or silicone, is provided on the contact surface of the seal block 10 to protect the surface of the object and to improve sealing performance when the seal block 10 is brought into contact with the edge sides of the portable terminal (object to be inspected). In addition, in order to form the chamber, the device is provided with a top-and-bottom pad 3 provided between the lower jig 1 and the upper jig 2, the pad including protrusions for sealing holes vertically passing through the object to be inspected H and partition walls for separating and compartmentalizing each part. A space in the top-and-bottom pad 3 constitutes a seating portion 11 where the object to be inspected H is placed.

When the upper jig 2 and the lower jig 1 are closed, the pushing member 14 provided on the upper jig engages with an inclined groove formed in the covering seal block 10 and pushes the covering seal block 10 toward the edge sides of the portable terminal, so as to bring it into tight contact. As a result, the covering seal block 10 seals holes formed on the edge sides of the portable terminal (object to be inspected), such as a charging socket or a speaker hole.

The problem is that, as display device technologies and battery technologies advance, portable terminals are becoming increasingly thinner. Thus, a covering seal block that covers the edge sides of a portable terminal, including holes formed on the edge sides thereof, such as a charging socket or a microphone hole, inevitably has limitations in being used for waterproofness inspection of various products.

For example, when sealing a SIM card slot in a portable terminal of reduced thickness T, the covering seal block needs to have sufficient allowance to cover the edge sides of the portable terminal while accommodating the thickness of the SIM card slot.

However, if remaining side thicknesses d1 and d2 of the portable terminal, excluding the slot thickness from the overall thickness T, are very small, the covering seal block may not seal the SIM card slot or may not maintain sufficient sealing performance. Accordingly, a new approach for sealing holes formed on the edge sides of a portable terminal (object to be inspected), such as a charging socket or a microphone hole, is required.

### [Document of Related Art]

(Patent Document 1) KR 10-1442072 B1
(Patent Document 2) KR 10-1598849 B1
(Patent Document 3) KR 10-1889353 B1
(Patent Document 4) KR 10-2022328 B1

### Disclosure

### Technical Problem

The present disclosure is intended to solve the above problems occurring in the related art. An objective of the present disclosure is to provide a waterproofness inspection apparatus having a novel sealing means.

In addition, an objective of the present disclosure is to provide a waterproofness inspection apparatus having a sealing means designed to flexibly cope with the positional tolerances of holes formed on edge sides of a portable terminal (object to be inspected), such as a SIM card insertion slot or a charging terminal socket.

### Technical Solution

In order to achieve the above-mentioned objectives, there is provided a waterproofness inspection apparatus
for testing waterproof performance of an object to be inspected by placing the object in a sealed chamber formed between a lower jig 1 and an upper jig 2, sealing a hole formed on an edge peripheral surface of the object with a sealing means 100, and measuring a pressure change inside the chamber. The apparatus includes: a sealing member 120 provided with an insert 123 that is inserted into and withdrawn from the hole, rather than a conventional covering seal block that covers the hole formed on an edge side of the object to be inspected and covers a predetermined area of the edge side, and composed of a movable body 121 configured to move toward or away from the chamber while guided by the lower jig 1; and a driving member 150 configured to move the movable body 121 toward the chamber or away from the chamber.

In addition, the lower jig 1 is provided with a guide groove 110 in order for the movable body 121 of the sealing member 120 to be guided by the lower jig 1 during forward and backward movement, and a protrusion 124 configured to be engaged with the guide groove 110 is provided on each side surface of the movable body 121.

In particular, by forming an upper gap Gu and a lower gap Gb as well as a left gap G1 and a right gap G2 between the protrusions 124 and the guide groove 110, the insert 123 is able to move in the vertical and horizontal directions to be inserted into the hole even when the position of the hole to be sealed varies within a positional tolerance range.

Other objectives to be achieved by the present disclosure and specific means for achieving the same will be described in greater detail in the detailed description of the present disclosure and the accompanying drawings.

### Advantageous Effects

The waterproofness inspection apparatus having a sealing means according to the present disclosure
makes it easy to seal a hole (such as a charging socket or a SIM card insertion slot) formed on the edge side of a portable terminal (object to be inspected), even when the remaining side thickness d1 and d2 excluding the slot thickness from the total thickness T of the portable terminal are very small.

Therefore, compared to the conventional process of performing a leakage test with a SIM card tray mounted in the portable terminal, the leakage test can be performed before inserting the SIM card tray, thereby improving the operational efficiency of the product manufacturing process.

Furthermore, although only allowed within a minimal range, positional tolerances inevitably exist in practice. Since the insert of the waterproofness inspection device according to the present disclosure is configured to move in the vertical and horizontal directions, it is possible to flexibly accommodate positional tolerances of holes in the portable terminal (object to be inspected).

Other advantageous effect of the present disclosure will be described in greater detail in the best mode for carrying out the present disclosure, as set forth below.

### Description of Drawings

FIGS. 1 and 2 show a portable terminal waterproofness inspection device according to conventional technologies, in which upper and lower jigs are open.

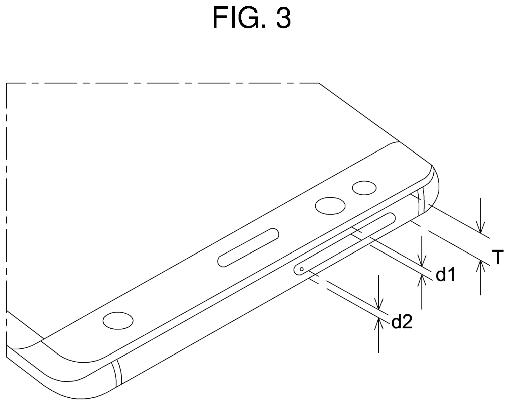

FIG. 3 is a view showing a SIM card slot of a portable terminal.
FIG. 4 is a waterproofness inspection apparatus equipped with an insert-type sealing member according to an embodiment of according to the present disclosure.
FIG. 5 is a view showing a side of the insert-type sealing member in an assembled state on a lower jig.
FIG. 6 is an assembled view showing the exterior of an insert-type sealing means according to the present disclosure.
FIG. 7 is an exploded perspective view of the insert-type sealing means according to the present disclosure.
FIG. 8 is a vertical cross-sectional view of the insert-type sealing means according to the present disclosure.
FIG. 9 is an explanatory view showing that an insert of the sealing means can move in the vertical and horizontal directions.
FIG. 10 is an exploded vertical cross-sectional view of an insert-type sealing means according to a modified embodiment of the present disclosure.

* Description of Reference Numerals for the Main Parts of the Drawings*
1: lower jig 2: upper jig
10: sealing member
100: sealing means
110: guide groove
120: sealing member
121: movable body 123: insert
124: protrusion 125: screw hole
130: support block
131: fastening hole 132: spring support portion
140: support rod
141: body portion 142: screw fixing groove
143: fixing washer 144: hemispherical fixing member
150: driving member

### Best Mode

The present disclosure may be modified in various ways and can take various forms, and aspects (or embodiments) are described in detail herein. However, this is not intended to limit the present disclosure to the specific disclosed forms, and it should be understood to include all modifications, equivalents, and alternatives within the spirit and scope of the present disclosure.

In addition, in the drawings, the components are illustrated in an exaggerated or reduced size or thickness, or in a simplified manner for ease of understanding. However, nothing in these illustrations should be construed as limiting the scope of the present disclosure.

The terminology used in this specification is employed solely to describe specific aspects (or embodiments) and is not intended to limit the present disclosure. Unless the context clearly indicates otherwise, singular expressions include plural expressions.

In the present application, terms such as "comprising" or "consisting of" are intended to indicate the presence of the features, numbers, steps, operations, components, parts, or combinations thereof as described in the specification, and should not be understood as excluding the presence or addition of one or more other features, numbers, steps, operations, components, parts, or combinations thereof.

Unless otherwise defined, all terms used herein, including technical and scientific terms, shall have the meanings commonly understood by those of ordinary skill in the art to which the present disclosure pertains. Terms that are generally defined in dictionaries should be interpreted in a manner consistent with their meaning in the context of the relevant art, and should not be interpreted in an idealized or overly formal sense unless expressly defined otherwise in the present application.

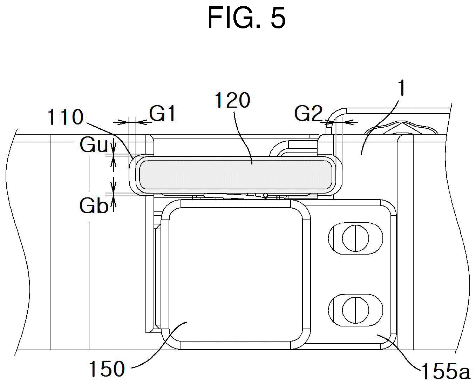

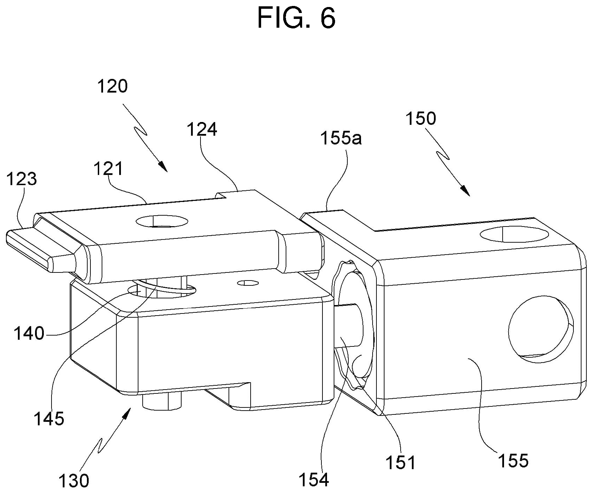

In describing a sealing means of the waterproofness inspection apparatus according to the present disclosure with reference to the accompanying drawings, for convenience, approximate directional references are provided with reference to FIGS. 5 and 6.

In this regard, the upward direction in FIG. 5 is defined as "upward" or the "upper direction", and the downward direction in FIG. 5 is defined as "downward" or the "lower direction". In addition, the leftward direction in FIG. 6 is defined as "forward" or "inward", and the rightward direction in FIG. 6 is defined as "backward" or "outward". Furthermore, the left and right directions are defined with reference to the "forward" direction in FIG. 6.

However, in the detailed description of the invention and the claims related to other drawings, if any specific directional reference is mentioned, such reference shall take precedence.

Hereinafter, a preferred embodiment of the waterproofness inspection apparatus having a sealing means according to the present disclosure will be described in detail with reference to the accompanying drawings, in which the apparatus is schematically illustrated.

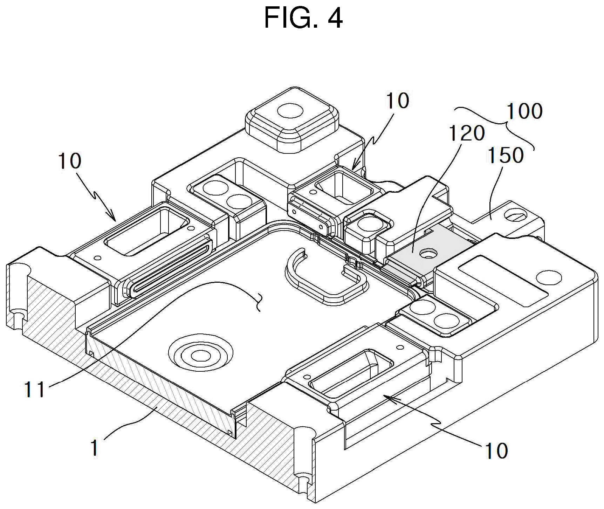

FIG. 4 is a perspective view illustrating a waterproofness inspection apparatus in a state in which an insert-type sealing means 100 according to an embodiment of the present disclosure is assembled to a lower jig 1. FIG. 4 is an exemplary view in which both a sealing member 10 according to conventional technologies and a sealing means 100 according to the present disclosure are simultaneously applied to the lower jig 1. Depending on the type of an object to be inspected and the shape of a hole, it is possible to seal the hole using only the sealing means 100 according to the present disclosure, or to use the sealing member 10 according to the conventional technologies together with the sealing means 100 according to the present disclosure in combination.

The present disclosure proposes a sealing means that seals a hole not by covering and sealing an outer peripheral surface of the hole to be sealed, but by including an insert configured to be inserted into the interior of the hole to be sealed.

As shown in FIG. 6, the sealing means 100 according to the present disclosure includes:
a sealing member 120 provided with, at a distal end thereof, an insert 123 that is inserted into and withdrawn from the hole, and is composed of a movable body 121 configured to move toward or away from a chamber while guided by the lower jig 1; and a driving member 150 configured to move the movable body 121 of the sealing member 120 toward the chamber or away from the chamber.

The insert 123 is a member inserted into a hole of an object to be inspected, and is preferably formed in a tapered shape in which a thickness in an up-and-down direction and a width in a left-and-right direction gradually decrease toward a tip thereof, so that the insert can be smoothly inserted into the corresponding hole even when a position of the hole is slightly shifted in the up-and-down or left-and-right direction. The insert 123 is preferably made of silicone, rubber, or a similar flexible material so that, when inserted into the hole of the object to be inspected, the insert 123 closely adheres to the inner surface of the hole, thereby enhancing the sealing performance.

Furthermore, the present disclosure proposes a sealing means that seals a hole by allowing the sealing means to move in the vertical and horizontal directions, even when the position of the hole to be sealed varies within an allowable range.

To this end, as shown in FIG. 5, the sealing means 100 according to the present disclosure forms a space in which the movable body 121 is installed at a certain location of the lower jig 1, and a guide groove 110 is formed on each side of the space so that the movable body 121 can be guided by the lower jig 1 and move in the front-rear direction. FIG. 5 is a view showing a side of the insert-type sealing member in a state assembled to the lower jig.

In addition, as shown in FIG. 6, protrusions 124 are respectively provided on the left and right sides of the movable body 121 so as to be fitted into the guide grooves 110. When the protrusions 124 of the movable body 121 are fitted into the guide grooves 110 of the lower jig 1, the movable body 121 may be stably moved along the guide grooves 110 by receiving power from the driving member 150. FIG. 6 is an assembled view showing the exterior of the insert-type sealing means according to the present disclosure.

In this case, as shown in FIG. 5, between the protrusions 124 and the guide grooves 110, an upper gap Gu, a lower gap Gb, a left gap G1, and a right gap G2 are formed, allowing the insert 123 to move in the vertical and horizontal directions within the positional tolerance range of the hole to be sealed. The sizes of the upper gap and the lower gap Gb are determined according to the allowable range of movement in the vertical direction, and the sizes of the left gap G1 and the right gap G2 are preferably determined according to the allowable range of movement (pivoting) in the horizontal direction.

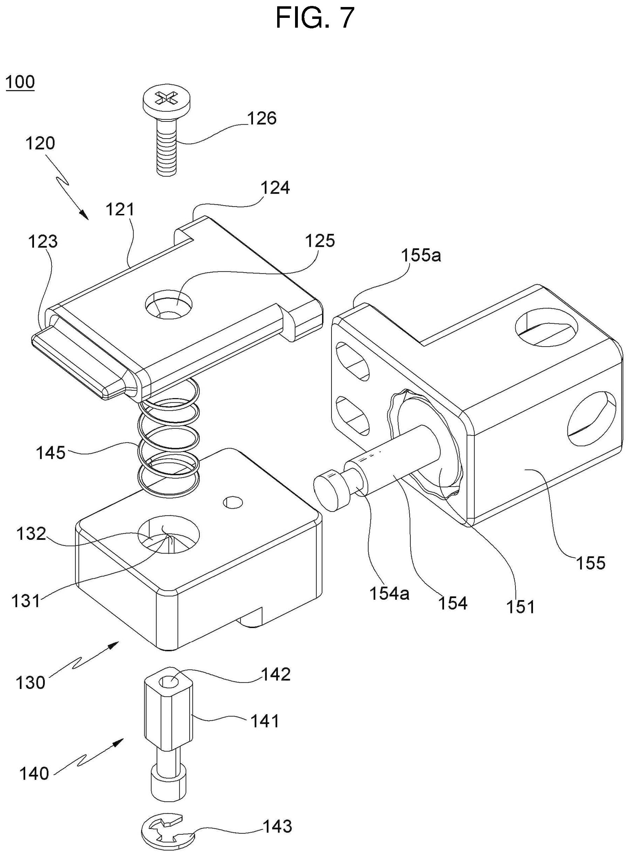

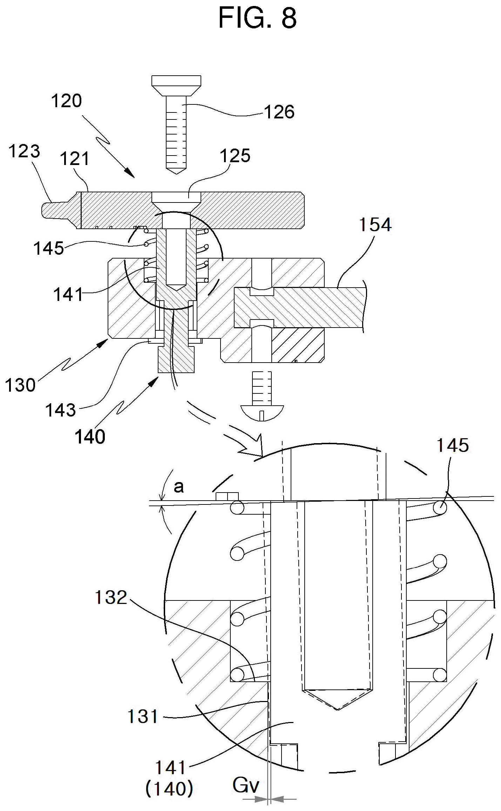

The components constituting the insert-type sealing means according to the present disclosure are illustrated in detail in FIG. 7, and a vertical cross-sectional view of the insert-type sealing means according to the present disclosure is shown in FIG. 8.

A support block 130 is provided between the sealing member 120 and the driving member 150 of the sealing means 100. The support block 130 supports the movable body 121 and moves together with the movable body 121 due to the movement of the driving member 150. A fastening hole 131 penetrating the support block 130 in the vertical direction is formed in the support block 130. A support rod 140 is inserted through the fastening hole 131.

The upper end of the support rod 140 is coupled to the lower part of the movable body 121, and the upper end of the support rod 140 is supported by the support block 130.

The driving member 150 may consist of: an actuator 151 operated by pneumatic or electrical signals; a plunger 154 that appears and disappears by reciprocating in the front-rear direction in response to the operation of the actuator; a housing 155 covering the actuator 151; and a bracket 155a for fixing the housing to the lower jig 1. A fixing groove is formed at the distal end of the plunger 154, by which the plunger 154 is coupled to the support block 130 via a screw.

When the driving member 150 operates, the sealing member 120 is advanced together with the support block 130. As the sealing means 100 advances, the insert 123 provided at the distal end of the movable body 121 begins to enter the hole of the object to be inspected. As the insert 123 is inserted, the insert 123 completely seals the hole of the object.

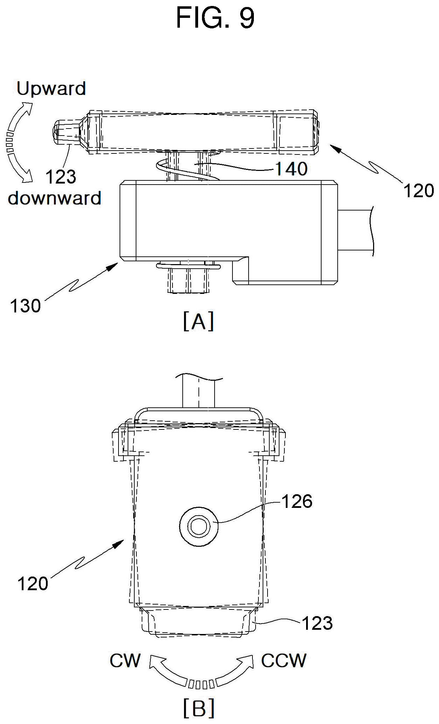

At this time, in case that the hole of the object varies within the allowable tolerance range, the insert-type sealing means 100 according to the present disclosure is characterized in that the sealing means 100 allows the sealing member 120 to move in the vertical and horizontal directions in correspondence with the position of the hole of the object. FIG. 9 illustrates that movement in the vertical and horizontal directions is possible. In FIG. 9 [A], the insert 123 of the sealing member 120 is shown as being capable of moving in the vertical direction, and in FIG. 9[B], the insert 123 of the sealing member 120 is shown as being capable of moving in the horizontal direction. In this case, strictly speaking, the rightward and leftward directions refer to the clockwise and counterclockwise directions, respectively.

To be specific, the position of the hole of the object to be inspected may change within the allowable tolerance range, and since the insert 123 according to the present disclosure is formed in a tapered shape in which the thickness in the vertical direction and the width in the horizontal direction gradually decrease toward the tip, even if the position of the hole is slightly shifted vertically or horizontally, when the sealing member 120 according to the present disclosure advances, the tip of the insert 123 will inevitably be inserted into the corresponding hole.

However, when the position of the hole is slightly shifted vertically or horizontally, as the insert advances, the insert will be biased toward the upper and/or lower surfaces and/or the left and/or right surfaces of the hole, resulting in strong contact on one side of the hole and insufficient contact on the opposite side.

At this time, another feature of the present disclosure is that the insert 123 and the sealing member 120 are capable of pivoting at a predetermined angle in the vertical and/or horizontal directions in correspondence with the position of the hole of the object to be inspected.

That is, to allow the sealing member 120 and the insert 123 to move in the vertical direction with respect to the horizontal plane, as shown in FIG. 8, the support block 130 is provided with the fastening hole 131 through which the support rod 140 passes, and a clearance Gv is formed between the inner surface of the fastening hole 131 and the outer surface of a body portion 141 of the support rod 140. Accordingly, within the range permitted by the clearance Gv, the support rod 140 is able to pivot at a predetermined angle in the vertical direction relative to the support block 130, and the movable body 121, which is integrated with the upper end of the support rod 140 by a fastening screw 126, is able to move in the vertical direction. FIG. 8 is an explanatory view illustrating the relationship between the clearance Gv and the allowable vertical movement of the movable body 121. In FIG. 8, a letter "a" indicates the angle by which the sealing member 120 and the insert 123 pivot downward with respect to the horizontal plane.

The size of the clearance Gv is determined in consideration of the allowable vertical movement range (pivoting angle a) of the movable body 121, and it is understood that the size of the clearance Gv is related to the sizes of the upper gap Gu and the lower gap Gb. Thus, when the protrusions 124 are in contact with the upper surfaces of the guide grooves 110, or when the body portion 141 of the support rod 140 is in contact with the inner surface of the fastening hole 131, the vertical movement of the movable body 121 is restricted.

In addition, in order for the movable body 121 to move (i.e., pivot) in the horizontal direction with respect to the central axis (vertical axis) of the support rod 140, it is preferable that the cross-sectional shape of the body portion 141 of the support rod 140 be formed as a polygon, such as a square or hexagon, and that the internal cross-sectional shape of the fastening hole 131 be formed as a polygon corresponding to the cross-sectional shape of the body portion 141 of the support rod 140.

Since there is a clearance Gv between the inner surface of the fastening hole 131 and the outer surface of the body portion of the support rod 140, the support rod 140 may pivot at a predetermined angle in the horizontal direction relative to the support block 130. At this time, in case that the fastening hole 131 and the support rod 140 have polygonal cross-sections, pivoting occurs only until the vertices of the cross-section of the body portion 141 of the support rod 140 contact the inner surface of the fastening hole, and further rotation is restricted. Accordingly, the pivoting (rotational) range of the support rod 140 can be limited.

As shown in FIG. 7, it is preferable that an elastic member (spring) 145 be provided between the movable body 121 and the support block 130.

When the movable body 121 and the support rod 140 are integrally coupled by tightening the fastening screw 126 through a screw hole 125 of the movable body 121 into a screw fixing groove 142 formed at the upper end of the support rod 140, the spring 145 pushes the movable body 121 upward relative to the support block 130, thereby returning the movable body 121 to the original position thereof in the vertical and horizontal directions.

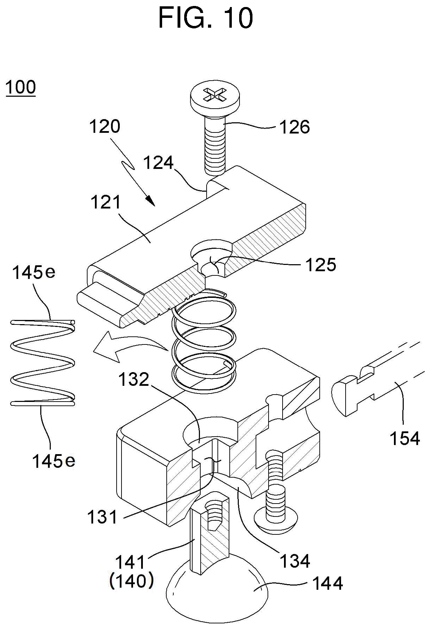

To maintain the horizontal orientation of the movable body 121, it is preferable that both ends of the spring 145 be formed as ground ends 145e, as shown in FIG. 10. In addition, when the upper end of the spring 145 is fixedly coupled to the lower surface of the movable body 121, and the lower end of the spring 145 is fixedly coupled to a spring support portion 132 of the support block 130 or to the upper surface of the support block 130, the movable body 121 can be returned to the original position thereof by the torsional restoring force of the spring 145 even if the movable body 121 is displaced in the left-right direction.

FIG. 10 is an exploded vertical cross-sectional view of an insert-type sealing means according to a modified embodiment of the present disclosure, and shows that the coupling structure between the support rod 140 and the support block 130 may be variously modified.

That is, to fix the lower end of the support rod (140), the embodiment illustrated in FIG. 7 shows that a fixing washer 143 may be applied, and FIG. 10 shows that a hemispherical fixing member 144, which allows easy pivoting of the support rod 140 in the vertical and horizontal directions while fixing the lower end of the support rod 140, may be applied. In the present embodiment, it is self-evident that a hemispherical concave portion 134 corresponding to the hemispherical fixing member 144 is formed in a lower part of the support block 130.

Although the present disclosure has been described above with reference to the accompanying drawings and with emphasis on preferred embodiments, it will be understood by those skilled in the art that various modifications, changes, and substitutions may be made, and such modifications, changes, and substitutions are intended to fall within the scope of the present disclosure.

## Claims

1. A waterproofness inspection apparatus comprising:
a lower jig (1) and an upper jig (2);
a sealed chamber formed between the lower jig (1) and the upper jig (2); and
at least one sealing means (100) for sealing a hole formed on an edge peripheral surface of an object that is to be inspected,
wherein the apparatus tests waterproof performance of the object by measuring a pressure change inside the chamber in a state in which the object is placed in the chamber, the lower jig (1) and the upper jig (2) are closed, and the hole is sealed by means of the sealing means (100),
wherein the sealing means (100) comprises:
a sealing member (120) provided with an insert (123) that is inserted into and withdrawn from the hole, and composed of a movable body (121) configured to move toward or away from the chamber while guided by the lower jig (1); and
a driving member (150) configured to move the movable body (121) toward the chamber or away from the chamber.

2. The apparatus of claim 1, wherein the lower jig (1) is provided with a guide groove (110) for guiding movement of the movable body (121), and a protrusion (124) fitted into the guide groove (110) is provided on each side surface of the movable body (121), so that the movable body (121) is stably movable along the guide groove (110),
wherein an upper gap (Gu) and a lower gap (Gb), and a left gap (G1) and a right gap (G2) are formed between the protrusions (124) and the guide groove (110), thereby allowing the insert (123) to move in vertical and horizontal directions within a positional tolerance range of the hole to be sealed.

3. The apparatus of claim 1 or 2, wherein the sealing means (100) comprises:
the driving member (150) configured to move the movable body (121) toward the chamber or away from the chamber;
a support block (130) that supports the movable body (121) and moves together with the movable body (121) due to movement of the driving member (150); and
a support rod (140) having an upper end coupled to a lower part of the movable body (121) and a lower end supported by the support block (130),
wherein between the movable body (121) and the support block (130), an elastic member (145) is provided, and
the movable body (121) and the support rod (140) are configured in a support structure that allows pivoting at predetermined angles in vertical and horizontal directions with respect to the support block (130).

4. The apparatus of claim 3, wherein the support block (130) is provided with a fastening hole (131) through which the support rod (140) passes, and a clearance is formed between an inner surface of the fastening hole (131) and an outer surface of the support rod (140),
wherein an inner cross-sectional shape of the fastening hole (131) is formed as a polygon corresponding to a cross-sectional shape of the support rod (140), so that the support rod (140) pivots at the predetermined angles in the vertical and horizontal directions with respect to the support block (130) within a range permitted by the clearance.
